Europäisches Patentamt

European Patent Office

Office européen des brevets

(19)

(11) Veröffentlichungsnummer: **0 044 555
B1**

(12) **EUROPÄISCHE PATENTSCHRIFT**

(45) Veröffentlichungstag der Patentschrift:
**09.05.84**

(21) Anmeldenummer: **81105704.1**

(22) Anmeldetag: **20.07.81**

(51) Int. Cl.³: **H 04 L 1/10,** H 04 L 25/52

(54) Regenerator mit Coderegel-Verletzungsprüfer.

(30) Priorität: **22.07.80 DE 3027733**

(43) Veröffentlichungstag der Anmeldung:
**27.01.82 Patentblatt 82/4**

(45) Bekanntmachung des Hinweises auf die Patenterteilung:
**09.05.84 Patentblatt 84/19**

(84) Benannte Vertragsstaaten:
**AT BE CH DE FR GB IT LI NL SE**

(56) Entgegenhaltungen:
**US - A - 3 987 395
US - A - 4 086 566**

**THE BELL SYSTEM TECHNICAL JOURNAL, Band 41, Nr.
1, Januar 1962, Seiten 25-97 New York, U.S.A. J.S.
MAYO: "A bipolar repeater for pulse code modulation
signals"**

(73) Patentinhaber: **SIEMENS AKTIENGESELLSCHAFT,
Berlin und München Wittelsbacherplatz 2,
D-8000 München 2 (DE)**

(72) Erfinder: **Jungmeister, Hans Günther, Dr.,
Kornwegerstrasse 4, D-8000 München 70 (DE)**

# Beschreibung

Die Erfindung betrifft einen Regenerator für im AMI-Code vorliegende PCM-Signale mit einem Zeitentscheider mit zwei getakteten D-Flipflops, an deren Ausgängen zwei getrennte unipolare Impulszüge amplituden- und zeitmässig regeneriert entnehmbar sind und mit einem Coderegel-Verletzungsprüfer.

Die Zusammenfassung einer Vielzahl von digitalisierten Sprachsignalen oder/und von Datensignalen zu einem Zeitmultiplexsignal und die Zusammenfassung mehrerer derartiger Zeitmultiplexsignale führt schliesslich über mehrere Hierarchiestufen hinweg zu Zeitmultiplexsignalen mit Bitraten, die bei einigen 100 Mbit/s liegen können. Derartige Zeitmultiplexsignale werden über Kupferkabel wegen der Gleichstromfreiheit des Übertragungssignals als pseudoternäre digitale Signale übertragen, wobei die Verwendung des AMI-Codes häufig Vorteile bringt. Beim AMI-Code handelt es sich um einen pseudoternären Code, in dem binäre Null-Ziffern als Null-Schritte und binäre Eins-Ziffern abwechselnd als positive und negative Signale mit logischem Eins-Pegel übertragen werden, wobei die Polarität aufeinanderfolgender Eins-Impulse jeweils wechselt.

Innerhalb der Übertragungsstrecke sind in bestimmten Abständen in die Kabelstrecke Impulsregeneratoren eingefügt, in denen die amplituden- und zeitmässige Regenerierung des Übertragungssignals erfolgt. Bei der Regenerierung wird wegen des Fehlens einer ternären Logik aus den positiven Eins-Signalen des Übertragungssignals ein erster und aus den negativen Eins-Signalen ein zweiter unipolarer Impulszug erzeugt und beide Impulszüge getrennt amplituden- und zeitmässig regeneriert. Anschliessend ist eine Zusammenfügung der unipolaren Impulszüge zu einem neuen, im AMI-Code vorliegenden Übertragungssignal möglich, im Falle des Endregenerators kann auch eine andere Signalverarbeitung angeschlossen sein.

Entsprechend der DE-A Nr. 2407954 ist es auch möglich, die Amplitudenentscheidung in Komparatoren auszuführen, denen die D-Flipflops als Zeitentscheider nachgeschaltet sind. Eine zusätzliche Möglichkeit, das bipolare AMI-Signal direkt zu entscheiden, besteht darin, dass die D-Flipflops — gegebenenfalls mit vorgeschalteten Amplitudenfiltern — lediglich durch Gleichspannungs-Pegelverschiebung bezüglich der Lage ihrer Schwellen an den Signalpegel angepasst werden. An den Flipflopausgängen entstehen auch in diesem Falle getrennte unipolare Impulszüge, die anschliessend zusammengefasst werden müssen.

Im Hinblick auf die einfache Erzeugungsmöglichkeit eines AMI-Signals mittels einer am Ende kurzgeschlossenen Viertelwellenstichleitung ist im Regenerator die Umformung der unipolaren Impulszüge in ein im Binär-Differenzcode vorliegendes Signal erwünscht. Die Coderegel für diesen Code besteht darin, dass eine logische Eins im binären Eingangssignal als Wechsel des logischen Pegels von Null auf Eins oder von Eins auf Null im Binär-Differenzcode markiert wird, während die logische Null im binären Eingangssignal als Beibehaltung des logischen Pegels Eins oder Null vom vorausgegangenen Bit im Binär-Differenzcode markiert wird.

Zur Betriebsüberwachung derartiger digitaler Übertragungssysteme mit im AMI-Code vorliegendem Übertragungssignal wird von der Redundanz dieses Codes Gebrauch gemacht, der zwar über drei digitale Werte verfügt, von denen aber zur Informationsübertragung zwei für denselben Zustand des ursprünglichen Signals verwendet werden. Mittels eines Coderegel-Verletzungsprüfers ist es unter Ausnutzung der speziellen Eigenschaft des AMI-Codes, dass aufeinanderfolgende Eins-Impulse immer mit unterschiedlicher Polarität auftreten müssen, möglich, das Übertragungssignal auch nach Verwürflung mit einer Pseudozufallsfolge zu überwachen. Wegen der Umformung des Übertragungssignals in jedem einzelnen Zwischenregenerator ist aber eine derartige Coderegel-Verletzungsprüfung auch in jedem einzelnen Zwischenregenerator erforderlich.

Aus der US-A Nr. 3987395 ist eine Regeneratoranordnung für bipolare digitale Signale bekannt, die einen Fehlerdetektor enthält. Dieser Fehlerdetektor enthält eingangsseitig zwei Flipflops, von denen das eine die positiven und das andere die negativen Impulszüge des bereits regenerierten Eingangssignals erhält, die sie jeweils mit der Verzögerung einer Taktperiode an ein zusätzliches Flipflop weiterleiten. Mit den beiden Ausgängen des Flipflops ist jeweils getrennt ein Eingang eines Komparators verbunden, dessen anderer Eingang mit einem der Signaleingänge verbunden ist. Die Ausgänge der Komparatoren sind über ein ODER-Gatter zusammengeführt, an dessen Ausgang ein Fehlerzähler angeschlossen ist.

Die Aufgabe der Erfindung besteht also darin, einen möglichst wenig aufwendigen Regenerator für im AMI-Code vorliegende PCM-Signale anzugeben, der einen Coderegel-Verletzungsprüfer enthält und regenerierte Signale im Binär-Differenzcode erzeugt.

Erfindungsgemäss wird die Aufgabe dadurch gelöst, dass zur Coderegel-Verletzungsprüfung zusätzlich ein RS-Flipflop vorgesehen ist, dessen Rücksetzeingang und dessen Setzeingang jeweils getrennt mit jeweils einem Ausgang der getakteten D-Flipflops verbunden sind, dass die Ausgänge des RS-Flipflops den Gegentaktsignalausgang für das regenerierte Signal darstellen, wobei an jedem Ausgangsanschluss ein unipolarer, die gesamte Information enthaltender Impulszug entnehmbar ist, dass zwei Gatteranordnungen mit jeweils zwei Eingängen vorgesehen sind und der eine Eingang der ersten Gatteranordnung mit jeweils zwei Eingängen vorgesehen sind und der eine Eingang der ersten Gatteranordnung mit dem nichtinvertierenden Ausgang des RS-Flipflops verbunden ist, dass der andere Eingang der ersten Gatteranordnung mit einem Ausgang desjenigen D-Flipflops verbunden ist, an das der Rücksetzeingang des RS-Flipflops angeschlossen ist, dass der eine Eingang der zweiten Gatteranordnung mit dem invertierenden Ausgang des RS-Flipflops verbunden ist und der andere Eingang der zweiten Gatteranordnung mit einem Ausgang desjenigen getakteten D-Flipflops verbunden ist, an das der Setzeingang des RS-Flipflops angeschlossen ist und dass die Ausgänge der Gatteranordnungen miteinander und mit einem Ausgang für ein Fehlersignal verbunden sind.

Im Hinblick auf die Einstellung definierter Signallaufzeiten bis zu den Eingängen der Gatteranordnungen ist eine Weiterbildung der Erfindung zweckmässig, bei der in die Verbindungen von den Ausgängen des RS-Flipflops zu den Eingängen der Gatteranordnungen je ein Laufzeitglied eingeschaltet ist und die Impulslaufzeit durch das RS-Flipflop und jeweils ein angeschlossenes Laufzeitglied insgesamt einer Bitdauer entspricht.

Beim Aufbau des Regenerators in ECL-Technik ist eine Weiterbildung der Erfindung zweckmässig, bei der als Gatteranordnungen ein erstes und ein zweites NOR-Gatter vorgesehen sind, der erste Eingang des ersten NOR-Gatters mit dem Ausgang für die inversen Signale des ersten D-Flipflops verbunden ist, der erste Eingang des zweiten NOR-Gatters mit dem nichtinvertierenden Ausgang des zweiten D-Flipflops verbunden ist, der Rücksetzeingang des RS-Flipflops mit dem nichtinvertierenden Ausgang des ersten D-Flipflops verbunden ist, der Setzeingang des RS-Flipflops mit dem invertierenden Ausgang des zweiten D-Flipflops verbunden ist, der zweite Eingang des ersten NOR-Gatters über ein Laufzeitglied mit dem nichtinvertierenden Ausgang des RS-Flipflops und der zweite Eingang des zweiten NOR-Gatters über ein zweites Laufzeitglied mit dem invertierenden Ausgang des RS-Flipflops verbunden ist.

Weitere zweckmässige Ausbildungen des Regenerators nach der Erfindung sind in den Patentansprüchen 4 bis 7 beschrieben.

Die Erfindung soll im folgenden anhand der Zeichnung näher erläutert werden.

In der Zeichnung zeigt:

Fig. 1 einen Teil eines Regenerators nach der Erfindung,

Fig. 2 ein Impulsdiagramm zum Regenerator nach Fig. 1,

Fig. 3 einen Teil eines Regenerators nach der Erfindung mit veränderter Eingangsschaltung, und

Fig. 4 einen Teil eines Regenerators nach der Erfindung mit einem Coderegel-Verletzungsprüfer in positiver Logik.

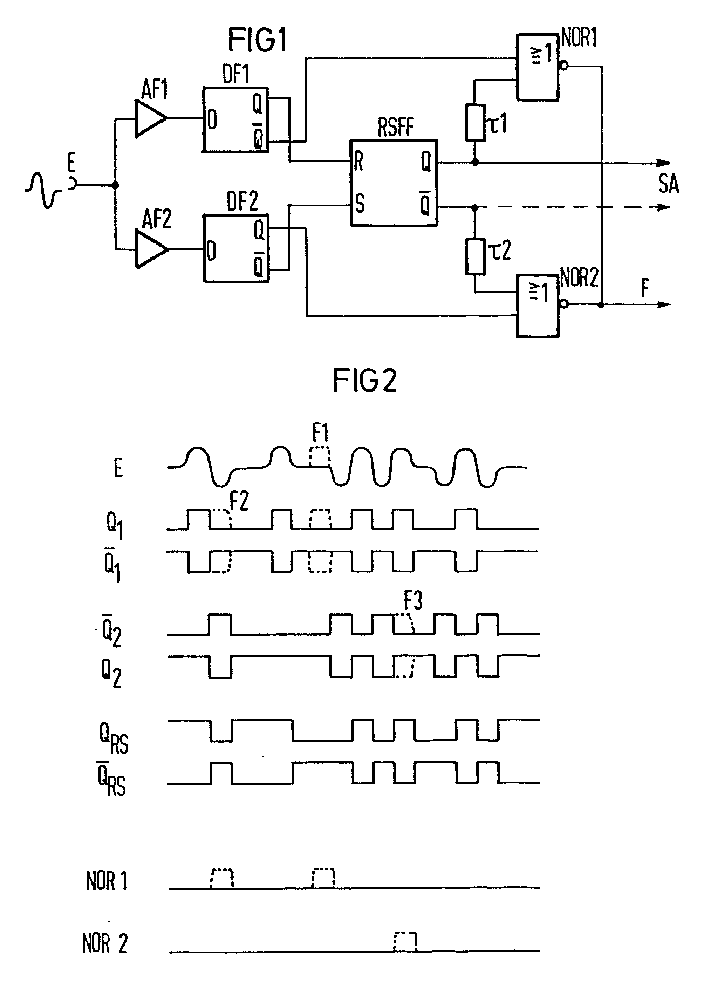

In der Fig. 1 ist der für die Erfindung wesentliche Teil eines Regenerators dargestellt, der die zur Amplitudenentscheidung der empfangenen Impulse notwendigen Amplitudenfilter und die üblicherweise zur Zeitentscheidung verwendeten D-Flipflops umfasst. Nicht mit dargestellt sind also die Fernspeiseweichen und die zur Entzerrung des Kabelfrequenzganges notwendige eingangsseitige Entzerreranordnung. Am Eingang E wird ein entzerrtes pseudoternäres Signal empfangen, das in bipolarer Form und im AMI-Code vorliegt. Durch das erste und das zweite Amplitudenfilter AF1, AF2 wird das bipolare Signal in zwei unipolare Impulszüge aufgeteilt, wobei vom ersten Amplitudenfilter AF1 der den positiven Impulsen des Eingangssignals entsprechende Impulszug nach Amplitudenentscheidung bzw. Amplitudenregenerierung an den D-Eingang eines ersten nachgeschalteten D-Flipflops DF1 abgegeben wird. Analog wird durch das zweite Amplitudenfilter ein den negativen Impulsen des Eingangssignals entsprechender Impulszug durch Pegelverschiebung ohne Gleichrichtung bzw. Invertierung in unipolarer Form an den D-Eingang eines zweiten D-Flipflops DF2 abgegeben. Die Entscheiderschwellen in den Amplitudenfiltern sind dabei jeweils auf die halbe Maximalamplitude der Eingangssignalimpulse eingestellt. Die Amplitudenfilter sind im vorliegenden Falle mittels emittergekoppelter Differenzverstärker aufgebaut. Für sehr hohe Übertragungsgeschwindigkeiten ist aufgrund des begrenzten Verstärkungsbandbreiteprodukts der aktiven Elemente die Verwendung von Amplitudenfiltern vorteilhaft, die nur eine amplitudenselektive Verstärkung der die Schwellen umgebenden Pegelbereiche vornehmen und ausserdem eine Pegelverschiebung ausführen, die die Schwellen der D-Flipflops an die für das amplitudenselektiv verstärkte Signal erforderliche Lage anpasst. Die D-Flipflops übernehmen dann die Aufgabe der eigentlichen Amplitudenentscheidung mit.

Die Takteingänge der D-Flipflops sind mit einer Quelle für einen Bittakt verbunden, diese Verbindungen sind ebenso wie die Verbindungen zu einer Betriebsspannungsquelle in der Zeichnung nicht dargestellt.

Zusätzlich zu den Regeneratorbaugruppen sind zur Ausbildung des eigentlichen Coderegel-Verletzungsprüfers ein RS-Flipflop RSFF, ein erstes und ein zweites Laufzeitglied $\tau 1$, $\tau 2$ und ein zweites NOR-Gatter mit den entsprechenden Verbindungen vorgesehen.

Der Rücksetzeingang des RS-Flipflops ist mit dem nichtinvertierenden Ausgang Q1 des ersten D-Flipflops DF1 verbunden, während der Setzeingang des RS-Flipflops an den invertierenden Ausgang $\overline{Q}2$ des zweiten D-Flipflops DF2 angeschlossen ist. Der eine Eingang des ersten NOR-Gatters NOR1 ist an den invertierenden Ausgang $\overline{Q}1$ des ersten D-Flipflops angeschlossen, während der zweite Eingang dieses NOR-Gatters an den nichtinvertierenden Ausgang $Q_{RS}$ des RS-Flipflops über ein erstes Laufzeitglied $\tau 1$ angeschlossen ist. Der nichtinvertierende Ausgang Q2 des zweiten D-Flipflops ist mit dem einen Eingang des zweiten NOR-Gatters verbunden, dessen anderer Eingang über ein zweites Laufzeitglied an den invertierenden Ausgang $\overline{Q}_{RS}$ des RS-Flipflops angeschlossen ist. Die Ausgänge der beiden NOR-Gatter sind nach Art einer *wired-or*-Verknüpfung miteinander und mit einem Ausgang F für ein Fehlersignal verbunden, während der nichtinvertierende und der invertierende Ausgang des RS-Flipflops ausserdem mit je einem Anschluss des Ausgangs SA für das im Binär-Differenzcode auftretende Ausgangssignal des Regenerators verbunden ist. Dieser Ausgang stellt einen Gegentaktausgang dar, wobei aber an jedem einzelnen Ausgangsanschluss in unipolarer Form die gesamte Signalinformation vorliegt.

Zur Erläuterung der Wirkungsweise der Anordnung nach Fig. 1 sei auf die Fig. 2 verwiesen, die die an einzelnen Messpunkten in der Anordnung nach Fig. 1 auftretenden Impulse zeigt. In der Zeile E ist das entzerrte Eingangssignal dargestellt, das am Zeitpunkt F1 durch einen Fehlerimpuls überlagert ist. In den Zeilen Q1 bzw. $\overline{Q1}$ sind die Ausgangssignale des ersten D-Flipflops DF1 und entsprechend in Zeilen $\overline{Q2}$ bzw. Q2 die Ausgangssignale des zweiten D-Flipflops DF2 dargestellt. Die Dauer der Impulse soll dabei etwa einer Bitdauer entsprechen. Es zeigt sich, dass durch die positiven Impulse des Eingangssignals das erste D-Flipflop und durch die negativen Impulse das zweite D-Flipflop geschaltet werden und dass der beispielsweise als positiver Impuls angenommene Fehlerimpuls F1 zum Schalten des ersten D-Flipflops führen würde.

Wenn man davon ausgeht, dass das RS-Flipflop zunächst gesetzt ist, dann wird durch den ersten positiven Eingangsimpuls, der über den Q-Ausgang des ersten D-Flipflops (entsprechend Zeile Q1) der Rücksetzeingang des RS-Flipflops einen Impuls erhält, der etwa am Ende des positiven Eingangsimpulses zum Rücksetzen des RS-Flipflops führt. Ein nachfolgender negativer Eingangsimpuls führt dabei über ein Ausgangssignal am $\overline{Q}$-Ausgang des zweiten D-Flipflops (entsprechend Zeile $\overline{Q2}$) zu einem Impuls am Setzeingang des RS-Flipflops, der zum erneuten Setzen des RS-Flipflops führt. Die Ausgangssignale des RS-Flipflops entsprechend Zeilen $Q_{RS}$ bzw. $\overline{Q}_{RS}$ liegen im Binär-Differenzcode vor, wobei im Impulsdiagramm entsprechend Fig. 2 der Einfachheit halber angenommen wurde, dass die Signallaufzeit durch das RS-Flipflop einer Bitdauer entspricht, so dass in diesem Falle die Laufzeitglieder $\tau1$ und $\tau2$ unnötig sind. In der Praxis wird aber ein RS-Flipflop verwendet, dessen Signallaufzeit geringer als eine Bitdauer ist, so dass die Signalform entsprechend Zeilen $Q_{RS}$ bzw. $\overline{Q}_{RS}$ erst am Ausgang der Laufzeitglieder dem Bitraster entspricht.

Die mit NOR1 und NOR2 bezeichneten Zeilen der Fig. 2 zeigen die Ausgangssignale der beiden NOR-Gatter entsprechend der Verknüpfung

$$\overline{Q} \vee Q_{RS} \quad \text{bzw.} \quad \overline{Q2 \vee \overline{Q}_{RS}}$$

Der positive Fehlerimpuls F1 im Eingangssignal wird über das erste D-Flipflop zum Eingang des ersten NOR-Gatters geleitet und erzeugt einen Impuls am NOR-Gatterausgang, da das RS-Flipflop durch den vorangegangenen positiven Eingangsimpuls bereits rückgesetzt ist und an dessen Q-Ausgang deshalb der logische Null-Pegel anliegt.

Als zweiter Fehlerfall sei angenommen, dass eine Störung im ersten D-Flipflop oder im vorgeschalteten Amplitudenfilter vorliegt, die zum Schalten des ersten D-Flipflops auch bei negativen Eingangsimpulsen führt. In diesem Falle tritt an den Ausgängen Q1 bzw. $\overline{Q1}$ des ersten D-Flipflops der mit F1 bezeichnete Fehlerimpuls auf, der sich unterschiedlich auswirken kann. In diesem Falle steht nämlich sowohl am Setz- als auch am Rücksetzeingang des RS-Flipflops ein Eingangssignal, so dass es vom zeitlichen Eintreffen dieser Signale abhängt, welches Signal weitergeschaltet wird. Setzt sich der vom gestörten ersten D-Flipflop stammende Rücksetzimpuls durch, dann wird schliesslich vom ersten NOR-Gatter ein Fehlersignal abgegeben, während bei Durchsetzen des vom zweiten D-Flipflop stammenden Setzimpulses kein Fehlersignal erzeugt wird, da ja auch kein Übertragungsfehler erfolgt ist.

Schliesslich sei noch der Fall betrachtet, dass sich im zweiten Amplitudenfilter AF2 oder im zweiten D-Flipflop DF2 kurzzeitig eine Störung, beispielsweise über den Stromversorgungsanschluss ergibt. Der Ausgangsimpuls des zweiten D-Flipflops ergibt zusammen mit dem Ausgangssignal des gesetzten RS-Flipflops ein Fehlersignal am Ausgang des zweiten NOR-Gatters NOR2. Damit ist gezeigt, dass durch den Regenerator mit angeschlossenem Coderegel-Verletzungsprüfer neben den auf der Übertragungsstrecke erzeugten und die Coderegel des AMI-Codes verletzenden Fehler auch solche erkannt werden, die durch fehlerhaften Betrieb im Regenerator selbst erzeugt werden.

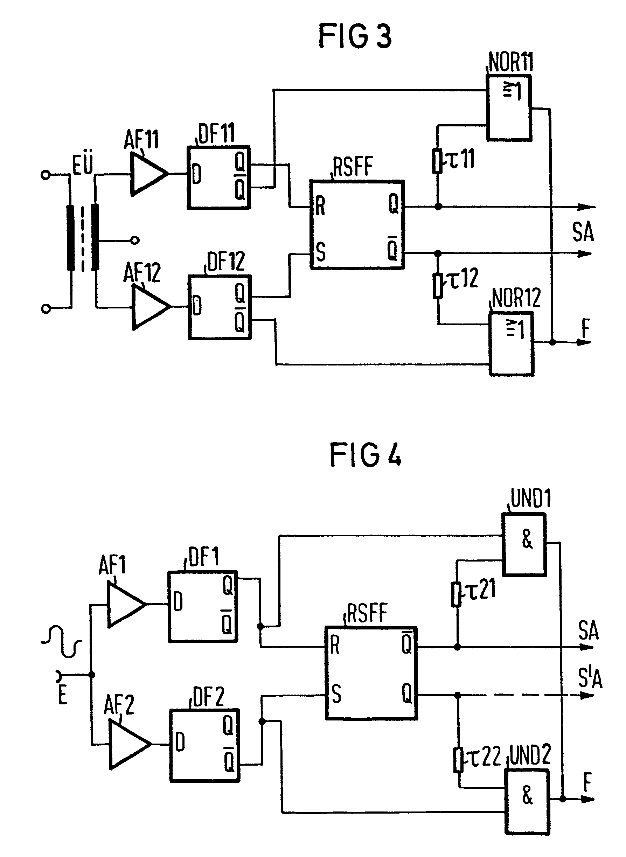

Die den D-Flipflops vorgeschalteten Amplitudenfilter können aus Differenzverstärkern bestehen, die durch Wahl der Referenzspannung so eingestellt sind, dass bei positiven Impulsen der eine und bei negativen Impulsen der andere Differenzverstärker umgeschaltet wird. Dabei werden die negativen Impulse in ihrer Phase nicht verändert. Aus der DE-A Nr. 2407954 ist auch eine Eingangsschaltung für einen Regenerator bekannt, die entsprechend der Fig. 3 einen Eingangsübertrager mit mittelangezapfter Sekundärwicklung enthält. An die äusseren Anschlüsse der Sekundärwicklung ist jeweils ein Differenzverstärker als Amplitudenentscheider angeschlossen. Bei dieser Eingangsschaltung ergibt sich ein Gleichrichtereffekt, durch den die Phase der negativen Impulse im Gegensatz zur vorher erläuterten Schaltung um 180° gedreht wird. Gegenüber der Schaltungsanordnung nach Fig. 1 ist dann entsprechend Fig. 3 lediglich die Beschaltung der Ausgänge des zweiten D-Flipflops DF12 zu ändern. Der nichtinvertierende Ausgang Q dieses D-Flipflops ist dann mit dem Setzeingang S des nachgeschalteten RS-Flipflops zu verbinden, während der invertierende Ausgang dieses D-Flipflops mit einem der Ausgänge des zweiten NOR-Gatters NOR2 zu verbinden ist.

Gelegentlich ist es erwünscht, den Coderegel-Verletzungsprüfer im Regenerator mittels einer positiven Logik aufzubauen. Beispielsweise können in der die getakteten D-Flipflops und das RS-Flipflop enthaltenden integrierten Schaltung noch UND-Gatter vorgesehen sein, die für den eigentlichen Regenerator nicht benötigt werden. In diesem Falle ist es zweckmässig, den Regenerator mit Coderegel-Verletzungsprüfer entsprechend der Fig. 4 aufzubauen. Die Fig. 4 enthält eingangsseitig wiederum die beiden, eingangsmässig parallelgeschalteten Amplitudenfilter AF1 und AF2, denen das erste und das zweite D-Flipflop DF1

und DF2 nachgeschaltet sind. Mit dem nichtinvertierenden Ausgang Q des ersten D-Flipflops ist entsprechend den Regeneratoren nach den Fig. 1 und 3 der Rücksetzeingang R des RS-Flipflops verbunden, während der Setzeingang S des RS-Flipflops abweichend vom Regenerator nach Fig. 3 mit dem invertierenden Ausgang $\overline{Q}$ des zweiten D-Flipflops DF2 verbunden ist. Die Verwendung eines ersten und eines zweiten UND-Gatters UND1 und UND2 macht es nun möglich, auf die Beschaltung der anderen Ausgänge der D-Flipflops zu verzichten und den einen Eingang des zweiten UND-Gatters UND2 mit dem Setzeingang des RS-Flipflops und damit mit dem invertierenden Ausgang $\overline{Q}$ des zweiten D-Flipflops zu verbinden, während der eine Eingang des ersten UND-Gatters UND1 mit dem Rücksetzeingang R des RS-Flipflops und damit mit dem nichtinvertierenden Ausgang Q des ersten D-Flipflops DF1 verbunden ist. Der zweite Eingang des ersten UND-Gatters ist mit dem invertierenden Ausgang $\overline{Q}$ des RS-Flipflops über ein Laufzeitglied $\tau21$ verbunden, während der zweite Eingang des zweiten UND-Gatters UND2 über ein weiteres Laufzeitglied $\tau22$ an den nichtinvertierenden Ausgang Q des RS-Flipflops angeschlossen ist. Die Ausgänge der beiden UND-Gatter sind wiederum entsprechend der bekannten *wired-or*-Schaltung direkt miteinander verbunden. An die Ausgänge der RS-Flipflops sind ausserdem die Signalausgänge SA bzw. S'A angeschlossen. An diesen Ausgängen steht das regenerierte Signal nicht im Übertragungscode, sondern im Binär-Differenzcode an, bei der Verwendung des Regenerators nach Fig. 4 als Streckenregenerator ist deshalb eine weitere Umcodierung erforderlich. Diese Umformung der regenerierten Signale in den AMI-Code ist besonders vorteilhaft mit Hilfe einer Stichleitung möglich, in der aus den unipolaren Impulsen an einem der beiden Signalausgänge des RS-Flipflops durch Reflexion am kurzgeschlossenen Ende der Stichleitung und bei einer eine Bitdauer der Impulse entsprechenden Laufzeit entsprechend verschobene Impulse umgekehrter Polarität erzeugt werden können. Dabei zeigt sich, dass ein Vertauschen des Rücksetzeinganges und des Setzeinganges am RS-Flipflop lediglich dazu führt, dass die positiven und die negativen Impulse in dem mittels Stichleitung erzeugten AMI-Signal vertauscht sind. Soll der Regenerator dagegen als Leitungsendgerät verwendet werden, so muss der Binär-Differenzcode in den normalen Binärcode rückcodiert werden. Diese Umcodierung ist in einfacher Weise mittels eines weiteren D-Flipflops möglich, dessen nichtinvertierender D-Eingang an den Signalausgang SA und dessen invertierender D-Eingang an den Signalausgang S'A angeschlossen ist. An den Ausgängen dieses weiteren D-Flipflops ist dann das regenerierte Signal im Übertragungscode, also im AMI-Code, entnehmbar.

Zur Sicherung der Impulssymmetrie im dynamischen Betrieb wird ein RS-Flipflop verwendet, dessen Zeitverzögerung für das Abfallen des Ausgangspegels vom Maximal- auf den Minimalwert der Zeitverzögerung für das Ansteigen des Ausgangspegels vom Minimal- auf den Maximalwert entspricht.

**Patentansprüche**

1. Regenerator für im AMI-Code vorliegende PCM-Signale mit einem Zeitentscheider mit zwei getakteten D-Flipflops, an deren Ausgängen zwei getrennte unipolare Impulszüge amplituden- und zeitmässig regeneriert entnehmbar sind und mit einem Coderegel-Verletzungsprüfer, dadurch gekennzeichnet, dass zur Coderegel-Verletzungsprüfung zusätzlich ein RS-Flipflop (RSFF) vorgesehen ist, dessen Rücksetzeingang (R) und dessen Setzeingang (S) jeweils getrennt mit jeweils einem Ausgang der getakteten D-Flipflops (DF1, DF2) verbunden sind, dass die Ausgänge des RS-Flipflops (RSFF) den Gegentaktsignalausgang (SA) für das regenerierte Signal darstellen, wobei an jedem Ausgangsanschluss ein unipolarer, die gesamte Information enthaltender Impulszug entnehmbar ist, dass zwei Gatteranordnungen mit jeweils zwei Eingängen vorgesehen sind und der eine Eingang der ersten Gatteranordnung mit dem nichtinvertierenden Ausgang (Q) des RS-Flipflops (RSFF) verbunden ist, dass der andere Eingang der ersten Gatteranordnung mit einem Ausgang desjenigen getakteten D-Flipflops verbunden ist, an das der Rücksetzeingang (R) des RS-Flipflops (RSFF) angeschlossen ist, dass der eine Eingang der zweiten Gatteranordnung mit dem invertierenden Ausgang ($\overline{Q}$) des RS-Flipflops (RSFF) verbunden ist und der andere Eingang der zweiten Gatteranordnung mit einem Ausgang desjenigen getakteten D-Flipflops verbunden ist, an das der Setzeingang (S) des RS-Flipflops (RSFF) angeschlossen ist, und dass die Ausgänge der Gatteranordnungen miteinander und mit einem Ausgang (F) für ein Fehlersignal verbunden sind.

2. Regenerator nach Patentanspruch 1, dadurch gekennzeichnet, dass in die Verbindungen von den Ausgängen des RS-Flipflops (RSFF) zu den Eingängen der Gatteranordnungen je ein erstes und ein zweites Laufzeitglied ($\tau1$, $\tau2$) eingeschaltet ist, und dass die Impulslaufzeit durch das RS-Flipflop und jeweils ein angeschlossenes Laufzeitglied insgesamt einer Bitdauer entspricht.

3. Regenerator nach einem der Patentansprüche 1 oder 2, dadurch gekennzeichnet, dass als Gatteranordnungen ein erstes und ein zweites NOR-Gatter (NOR1, NOR2) vorgesehen sind, dass der erste Eingang des ersten NOR-Gatters (NOR1) mit dem Ausgang ($\overline{Q}$) für die inversen Signale des ersten D-Flipflops (DF1) verbunden ist, dass der erste Eingang des zweiten NOR-Gatters (NOR2) mit dem nichtinvertierenden Ausgang (Q) des zweiten D-Flipflops (DF2) verbunden ist, dass der Rücksetzeingang (R) des RS-Flipflops mit dem nichtinvertierenden Ausgang (Q) des ersten D-Flipflops (DF1) verbunden ist, dass der Setzeingang (S) des RS-Flipflops mit dem invertierenden Ausgang ($\overline{Q}$) des zweiten D-Flipflops (DF2) verbunden ist, dass der zweite Eingang des ersten NOR-Gatters (NOR1) über das erste Laufzeitglied ($\tau$1) mit dem nichtinvertierenden Ausgang (Q) des RS-Flipflops und der zweite Eingang des zweiten NOR-Gatters (NOR2) über das zweite Laufzeitglied ($\tau$) mit dem invertierenden Ausgang ($\overline{Q}$) des RS-Flipflops verbunden ist.

4. Regenerator nach einem der Patentansprüche 1 oder 2, dadurch gekennzeichnet, dass als Gatteranordnungen ein erstes und ein zweites UND-Gatter (UND1, UND2) vorgesehen sind und dass der erste Eingang des ersten UND-Gatters (UND1) mit dem Rücksetzeingang (R), der zweite Eingang des ersten UND-Gatters mit dem invertierenden Ausgang ($\overline{Q}$) des RS-Flipflops verbunden ist, dass der erste Eingang des zweiten UND-Gatters (UND2) mit dem Setzeingang (S) und der zweite Eingang des zweiten UND-Gatters mit dem nichtinvertierenden Ausgang (Q) des RS-Flipflops verbunden ist, und dass die Ausgänge der beiden UND-Gatter über eine ODER-Schaltung miteinander und mit dem Ausgang für ein Fehlersignal verbunden sind.

5. Regenerator nach den Patentansprüchen 1 bis 3, dadurch gekennzeichnet, dass der nichtinvertierende Ausgang (Q) des ersten D-Flipflops mit dem Rücksetzeingang (R) und der nichtinvertierende Ausgang (Q) des zweiten D-Flipflops mit dem Setzeingang (S) des RS-Flipflops verbunden ist, dass die invertierenden Ausgänge ($\overline{Q}$) der beiden D-Flipflops jeweils getrennt mit Eingängen der Gatteranordnungen (NOR11, NOR12) verbunden sind, und dass ein Eingangsübertrager mit mittelangezapfter Sekundärwicklung vorgesehen ist, bei dem die äusseren Anschlüsse der Sekundärwicklung gegebenenfalls über als Amplitudenentscheider betriebene Differenzverstärker mit den D-Eingängen der D-Flipflops verbunden sind.

6. Regenerator nach den Patentansprüchen 1 bis 4, dadurch gekennzeichnet, dass ein RS-Flipflop (RSFF) vorgesehen ist, dessen Zeitverzögerung für das Abfallen des Ausgangspegels vom Maximal- auf den Minimalwert der Zeitverzögerung für das Ansteigen des Ausgangspegels vom Minimal- auf den Maximalwert entspricht, und dass die Signallaufzeit durch das RS-Flipflop wesentlich kleiner als eine Bitdauer ist.

7. Regenerator nach den Patentansprüchen 1 bis 6, dadurch gekennzeichnet, dass ein drittes D-Flipflop mit einem nichtinvertierenden Eingang und einem invertierenden Eingang sowie mit einem nichtinvertierenden Ausgang und einem invertierenden Ausgang vorgesehen ist, dass der nichtinvertierende Eingang mit dem nichtinvertierenden Ausgang des RS-Flipflops und der invertierende Eingang des dritten D-Flipflops mit dem invertierenden Ausgang ($\overline{Q}$) des RS-Flipflops verbunden ist.

## Claims

1. Regenerator for PCM-signals occurring in AMI-code, with a time decision device having two pulsed D flip-flops from whose outputs two isolated unipolar pulse trains can be obtained regenerated in terms of amplitude and time, and with a code rule infringement checking device, characterised in that for the code rule infringement checking there is additionally provided an RS flip-flop (RSFF) whose reset input (R) and whose set input (S) are respectively separately connected to one output of the pulsed D flip-flops (DF1, DF2); that the outputs of the RS flip-flop (RSFF) produce the push-pull signal output (SA) for the regenerated signal, where a unipolar pulse train which contains the total information can be obtained from each output terminal; that two gate arrangements each having two inputs are provided, and the first input of the first gate arrangement is connected to the non-inverting output (Q) of the RS flip-flop (RSFF); that the other input of the first gate arrangement is connected to an output of the particular pulsed D flip-flop which is connected to the reset input (R) of the RS flip-flop (RSFF); that the first input of the second gate arrangement is connected to the inverting output ($\overline{Q}$) of the RS flip-flop (RSFF), whereas the other input of the second gate arrangement is connected to an output of the particular pulsed D flip-flop which is connected to the set input (S) of the RS flip-flop (RSFF); and that the outputs of the gate arrangements are connected to one another and to an output (F) for an error signal.

2. Regenerator as claimed in Patent Claim 1, characterised in that a first and a second delay line ($\tau$1, $\tau$2) are interposed into the connections leading from the outputs of the RS flip-flop (RSFF) to the inputs of the gate arrangements, and that the pulse transit time through the RS flip-flop and through a connected delay line amounts overall to 1 bit duration.

3. Regenerator as claimed in Patent Claim 1 or 2, characterised in that a first and a second NOR gate (NOR1, NOR2) are provided as gate arrangements; that the first input of the first NOR gate (NOR1) is connected to the output ($\overline{Q}$) for the inverse signals of the first D flip-flop (DF1); that the first input of the second NOR gate (NOR2) is connected to the non-inverting output (Q) of the second D flip-flop (DF2); that the reset input (R) of the RS flip-flop is connected to the non-inverting output (Q) of the first D flip-flop (DF1); that the set input (S) of the RS flip-flop is connected to the inverting output ($\overline{Q}$) of the second D flip-flop (DF2); that the second input of the first NOR gate (NOR1) is connected via the first delay line ($\tau$1) to the non-inverting output (Q) of the RS flip-flop, whereas the second input of the second NOR gate (NOR2) is connected via the second delay line ($\tau$) to the inverting output ($\overline{Q}$) of the RS flip-flop.

4. Regenerator as claimed in Patent Claim 1 or 2, characterised in that a first and a second AND gate (UND1, UND2) are provided as gate arrangements; that the first input of the first AND gate (UND1) is connected to the reset input (R), whereas the second input of the first AND gate is connected to the inverting output ($\overline{Q}$) of the RS flip-flop; that the first input of the second AND gate (UND2) is connected to the set input (S), whereas the second input of the second AND gate is connected to the non-inverting output (Q) of the RS flip-flop; and that the outputs of the two AND gates are connected *via* an OR circuit to one another and to the output for an error signal.

5. Regenerator as claimed in Patent Claims 1 to 3, characterised in that the non-inverting output (Q) of the first D flip-flop is connected to the reset input (R); that the non-inverting output (Q) of the second D flip-flop is connected to the set input (S) of the RS flip-flop; that the inverting outputs ($\overline{Q}$) of the two D flip-flops are respectively separately connected to inputs of the gate arrangements (NOR11, NOR12); and that an input transformer is provided, which has a centrally tapped secondary winding, in which the outer terminals of the secondary winding are connected where necessary *via* differential amplifiers, operated as amplitude decision devices, to the D inputs of the D flip-flops.

6. Regenerator as claimed in Patent Claims 1 to 4, characterised in that an RS flip-flop (RSFF) is provided whose time delay for the drop in the output level from the maximal to the minimal value corresponds to the time delay for the increase in the output level from the minimal to the maximal value, and that the signal transit time through the RS flip-flop is substantially shorter than 1 bit duration.

7. Regenerator as claimed in Patent Claims 1 to 6, characterised in that a third D flip-flop is provided having a non-inverting input and an inverting input and having a non-inverting output and an inverting output; that the non-inverting input is connected to the non-inverting output of the RS flip-flop; and that the inverting input of the third D flip-flop is connected to the inverting output ($\overline{Q}$) of the RS flip-flop.

**Revendications**

1. Régénérateur pour des signaux PCM se présentant dans le code AMI, comportant un discriminateur de temps comprenant deux bascules de type D synchronisées, aux sorties desquelles deux trains d'impulsions unipolaires distincts peuvent être prélevés en étant régénérés en amplitude et en temps, ainsi qu'un vérificateur de violation de la loi de codage, caractérisé par le fait que, pour la vérification de violation de la loi de codage, il est prévu en plus une bascule de type RS (RSFF) dont l'entrée de mise dans l'état de repos (R) et l'entrée de mise dans l'état excité (S) sont respectivement reliées, de façon distincte, à une sortie respective des bascules de type D (DF1, DF2) synchronisées, que les sorties de la bascule de type RS (RSFF) représentent la sortie symétrique de signaux (SA) pour le signal régénéré, un train d'impulsions unipolaire contenant l'information globale pouvant être prélevée sur chaque borne de sortie, qu'il est prévu deux circuits de porte comportant respectivement deux entrées et qu'une des entrées du premier circuit de porte est reliée à la sortie non inverseuse (Q) de la bascule de type RS (RSFF), que l'autre entrée du premier circuit de porte est reliée à une sortie de celle des bascules de type D synchronisées, à laquelle est reliée l'entrée de mise dans l'état de repos (R) de la bascule de type RS (RSFF), qu'une des entrées du second circuit de porte est reliée à la sortie inverseuse ($\overline{Q}$) de la bascule de type RS (RSFF) et que l'autre entrée du second circuit de porte est reliée à une sortie de celle des bascules de type D synchronisées, à laquelle est reliée l'entrée de mise dans l'état excité (S) de la bascule de type RS (RSFF), et que les sorties des circuits de porte sont reliées entre elles et à une sortie (F) pour un signal de défaut.

2. Régénérateur suivant la revendication 1, caractérisé par le fait que, dans les liaisons allant des sorties de la bascule de type RS (RSFF) aux entrées des circuits de porte, il est respectivement inséré un premier et un second élément de retard ($\tau 1$, $\tau 2$), et que le temps de propagation des impulsions à travers la bascule de type RS et un élément de retard qui y est respectivement relié correspondant au total à la durée de 1 bit.

3. Régénérateur suivant l'une des revendications 1 ou 2, caractérisé par le fait que, en tant que circuits de porte, il est prévu une première et une seconde porte OU (NOR1, NOR2), que la première entrée de la première porte OU (NOR1) est reliée à la sortie ($\overline{Q}$) pour les signaux inversés de la première bascule de type D (DF1), que la première entrée de la seconde porte OU (NOR2) est reliée à la sortie non inverseuse (Q) de la seconde bascule de type D (DF2), que l'entrée de mise dans l'état de repos (R) de la bascule de type RS est reliée à la sortie non inverseuse (Q) de la première bascule de type D (DF1), que l'entrée de mise dans l'état excité (S) de la bascule de type RS est reliée à la sortie inverseuse ($\overline{Q}$) de la seconde bascule de type D (DF2), que la seconde entrée de la première porte OU (NOR1) est reliée à la sortie non inverseuse (Q) de la bascule de type RS par l'intermédiaire du premier élément de retard ($\tau 1$), et que la seconde entrée de la seconde porte OU (NOR2) est reliée à la sortie inverseuse ($\overline{Q}$) de la bascule de type RS par l'intermédiaire du second élément de retard ($\tau$).

4. Régénérateur suivant l'une des revendications 1 ou 2, caractérisé par le fait que, comme circuits de porte, il est prévu une première et une seconde porte ET (UND1, UND2) et que la première entrée de la première porte ET (UND1) est reliée à l'entrée de mise dans l'état de repos (R), que la seconde entrée de la première porte ET est reliée à la sortie inverseuse ($\overline{Q}$) de la bascule de type RS, que la première entrée de la seconde porte ET (UND2) est reliée à l'entrée de mise dans l'état excité (S) et que la seconde entrée de la seconde porte ET est reliée à la sortie non inversée (Q) de la bascule de type RS, et que les sorties des deux portes ET sont reliées l'une à l'autre, par l'intermédiaire d'un circuit OU, et à la sortie pour un signal de défaut.

5. Régénérateur suivant les revendications 1 à 3, caractérisé par le fait que la sortie non inverseuse (Q) de la première bascule de type D est reliée à l'entrée de mise dans l'état de repos (R) et que la sortie non inverseuse (Q) de la seconde bascule de type D est reliée à l'entrée de mise dans l'état excité (S) de la bascule de type RS, que les sorties inverseuses (Q̄) des deux bascules de type D sont respectivement reliées, de façon distincte, aux entrées des circuits de porte (NOR11, NOR12), et qu'il est prévu un transformateur d'entrée comportant un enroulement secondaire à prise centrale, pour lequel les bornes extérieures de l'enroulement secondaire sont reliées aux entrées D de la bascule de type D, éventuellement par l'intermédiaire d'amplificateurs différentiels fonctionnant comme des discriminateurs d'amplitude.

6. Régénérateur suivant les revendications 1 à 4, caractérisé par le fait qu'il est prévu une bascule de type RS (RSFF) dont le retard pour la descente du niveau de sortie de la valeur maximale jusqu'à la valeur minimale correspond au retard pour la montée du niveau de sortie de la valeur minimale jusqu'à la valeur maximale, et que le temps de propagation des signaux à travers la bascule de type RS est nettement plus faible que la durée de 1 bit.

7. Régénérateur suivant les revendications 1 à 6, caractérisé par le fait qu'il est prévu une troisième bascule de type D comportant une entrée non inverseuse et une entrée inverseuse, ainsi qu'une sortie non inverseuse et une sortie inverseuse, que l'entrée non inverseuse est reliée à la sortie non inverseuse de la bascule de type RS et que l'entrée inverseuse de la troisième bascule de type D est reliée à la sortie inverseuse (Q̄) de la bascule de type RS.

## FIG 1

## FIG 2

0 044 555

# FIG 3

# FIG 4